**Europäisches Patentamt**

**European Patent Office**

**Office européen des brevets**

(19)

(11) Veröffentlichungsnummer : **0 455 636 B1**

(12) **EUROPÄISCHE PATENTSCHRIFT**

(45) Veröffentlichungstag der Patentschrift :
**05.08.92 Patentblatt 92/32**

(21) Anmeldenummer : **89910818.7**

(22) Anmeldetag : **03.10.89**

(86) Internationale Anmeldenummer :
**PCT/DE89/00624**

(87) Internationale Veröffentlichungsnummer :
**WO 90/08663 09.08.90 Gazette 90/19**

(51) Int. Cl.⁵ : **B60C 23/04**

(54) **REIFENDRUCKÜBERWACHER FÜR FAHRZEUGE.**

(30) Priorität : **30.01.89 DE 3902644**

(43) Veröffentlichungstag der Anmeldung :
**13.11.91 Patentblatt 91/46**

(45) Bekanntmachung des Hinweises auf die
Patenterteilung :
**05.08.92 Patentblatt 92/32**

(84) Benannte Vertragsstaaten :
**DE FR GB IT SE**

(56) Entgegenhaltungen :
**DE-A- 2 626 475**
**DE-A- 3 243 854**
**DE-A- 3 741 129**

(73) Patentinhaber : **ROBERT BOSCH GMBH**
**Postfach 30 02 20**
**W-7000 Stuttgart 30 (DE)**

(72) Erfinder : **HETTICH, Gerhard**
**Martin-Renz-Stra e 8**
**W-8501 Dietenhofen (DE)**

EP 0 455 636 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Stand der Technik

Die Erfindung geht aus von einem Reifendrucküberwacher für Kraftfahrzeuge nach der Gattung des Hauptanspruchs.

Für hohe Fahrzeuggeschwindigkeiten von über 160 km/h schreiben Reifen- und Fahrzeughersteller zur Gewährleistung der Fahrsicherheit erhöhte Reifendrücke vor. Will man diese berücksichtigen, so muß die Schaltschwelle des am Rad befestigten Druckschalters auf den größten erforderlichen Druck eingestellt werden. Dies führt zu einem Komfortverlust bei niedrigen Geschwindigkeiten (DE-A-32 43 854). Wird dies nicht berücksichtigt und der Reifendrucksensor auf den im unteren Geschwindigkeitsbereich bei Vollast vorgeschriebenen Reifendruck eingestellt, so wird bei hohen Geschwindigkeiten der erforderliche höhere Reifendruck nicht überwacht, sondern vielmehr eine nicht vorhandene Sicherheit durch die Reifendruck-Überwachungseinrichtung vorgetäuscht.

Aus der DE-A-26 26 475 ist es bekannt, die Membran der Referenzdruckkammer eines Reifendrucküberwachers mit einem massiven Kolben zu versehen, an dessen Stirnseite der Schlauch des zu überwachenden Reifens anliegt und der bei ausreichendem Luftdruck im Reifen die Membran entgegen dem Druck in der Referenzdruckkammer so weit eindrückt, daß in der Referenzdruckkammer ein elektrischer Kontakt geschlossen wird. Dort ist ferner erwähnt, daß Zentrifugalkräfte am Kolben der Membran die vom Reifendruck auf die Membran ausgeübte Kraft bei steigender Geschwindigkeit vorteilhaft verringern, so daß bei höheren Geschwindigkeiten der Reifendruck erhöht werden muß, um den Schaltkontakt geschlossen zu halten. Bei dieser Lösung ist nachteilig, daß der als Zusatzmasse für die Membran verwendete Kolben vom Schlauch des Reifens abgedeckt ist, so daß die an ihm wirksamen Fliehkräfte nur zum Teil und völlig unbestimmbar an der Referenzdruckkammer zur Anhebung der Schaltschwelle wirksam werden. Nachteilig ist ferner, daß diese Zusatzmasse im Zentrum der Membran an dieser festgenietet ist und dadurch nicht nur die Membran schwächt, sondern darüber hinaus durch die Versteifung an der Nietstelle die druck- und fliehkraftabhängige Verformung der Membran sehr unterschiedlich und unberechenbar beeinflußt. Mit dieser Lösung ist es daher nicht möglich, die Anhebung der Schaltschwelle um ein reproduzierbares Maß bei einer bestimmten Geschwindigkeit gegenüber dem Stillstand zu realisieren, da die geschwindigkeitsabhängige Anhebung der Schaltschwelle bei dieser bekannten Ausführung nicht vorher bestimmbar ist.

Mit der vorliegenden Lösung wird angestrebt, einen Reifendrucküberwacher zu entwickeln, bei dem die Zusatzmasse an der Membran der Referenzdruckkammer derart ausgebildet und angeordnet ist, daß die Elastizität der Membran dadurch nicht beeinträchtigt und die Schaltschwelle geschwindigkeitsabhängig um einen vorher bestimmbaren Betrag gegenüber dem Stillstand angehoben wird.

Der erfindungsgemäße Reifendrucküberwacher mit den kennzeichnenden Merkmalen des Hauptanspruchs hat den Vorteil, daß die gegenüber der steifen, vorzugsweise metallischen Membran weiche Zusatzmasse die Elastizität sowie die Festigkeit der Membran nicht mehr beeinflußt und darüber hinaus durch gezielte Dosierung eine reproduzierbare Anhebung der Schaltschwelle in Abhängigkeit von der Drehzahl des Rades ermöglicht. Damit wird bei hohen Geschwindigkeiten des Fahrzeugs immer dann von der Reifendruck-Überwachungseinrichtung ein Signal ausgelöst, wenn das Fahrzeug die für den vorhandenen Reifendruck zulässige Höchstgeschwindigkeit überschreitet. Der überwachte Mindestdruck im Reifen wird folglich mit steigender Geschwindigkeit definiert angehoben. Ein weiterer Vorteil besteht darin, daß die Kennlinie des geschwindigkeitsabhängig ansteigenden Schwellwertes des Reifendrucküberwachers durch die an der Zusatzmasse angreifenden Fliehkräfte mit zunehmender Geschwindigkeit progressiv ansteigt. Damit ist es möglich, den Schwellwert über den gesamten Geschwindigkeitsbereich in genügendem Abstand oberhalb des Druckwertes zu halten, bei dem der Reifen unter Vollast zerstört würde (sogenannte Zerstörgeschwindigkeit).

In der Patentanmeldung DE-A-37 41 129, veröffondlicht nach dem Prioritätstag ist bereits vorgeschlagen worden, die Zusatzmasse in Form eines Fliehgewichtes möglichst punktförmig im Zentrum der Membran durch Schweißen zu befestigen, um die Sensitivität der Membran zu erhalten. Diese Lösung ist jedoch noch unbefriedigend, da durch den Schweißvorgang die Membran zwangsläufig in ihrer Struktur beschädigt wird und da die Festigkeit einer solchen Verbindung den harten Betriebsbedingungen und Umwelteinflüssen nur dann standhält, wenn die Befestigung der Zusatzmasse an einer ausreichend großen Membranfläche erfolgt, was wiederum eine Membranversteifung bewirkt. Diese Mängel werden durch die flächige Anbringung der elastischen Zusatzmasse auf der Membranfläche durch Kleben, Haften oder dergleichen vermieden.

Durch die in den Unteransprüchen aufgeführten Maßnahmen ergeben sich vorteilhafte Weiterbildungen und Verbesserungen der im Hauptanspruch angegebenen Merkmale.

Zeichnung

Ausführungsbeispiele der Erfindung sind in der Zeichnung dargestellt und in der nachfolgenden Beschreibung näher erläutert. Es zeigen Figur 1 den Ausschnitt eines Fahrzeugrades mit einem in der Felge eingesetzten, erfindungsgemäßen Reifendrucküberwacher, Figur 2 einen Querschnitt durch den erfindungsgemäßen Reifendrucküberwacher in vergrößerter Darstellung, Figur 3 die geschwindigkeitsabhängige Kennlinie für die Anhebung der Schaltschwelle sowie Figur 4 und 5 verschiedene Ausführungsformen für die Anbringung der Zusatzmasse an der Membran.

Beschreibung der Ausführungsbeispiele

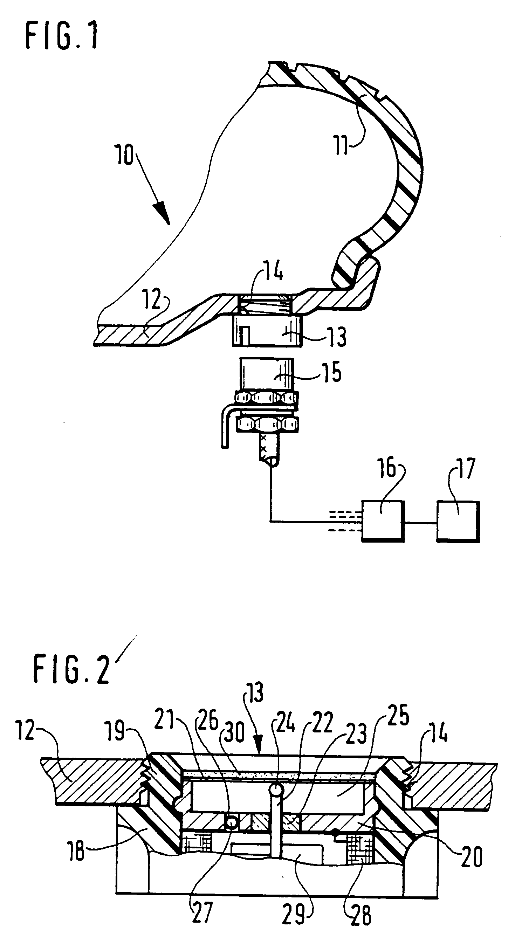

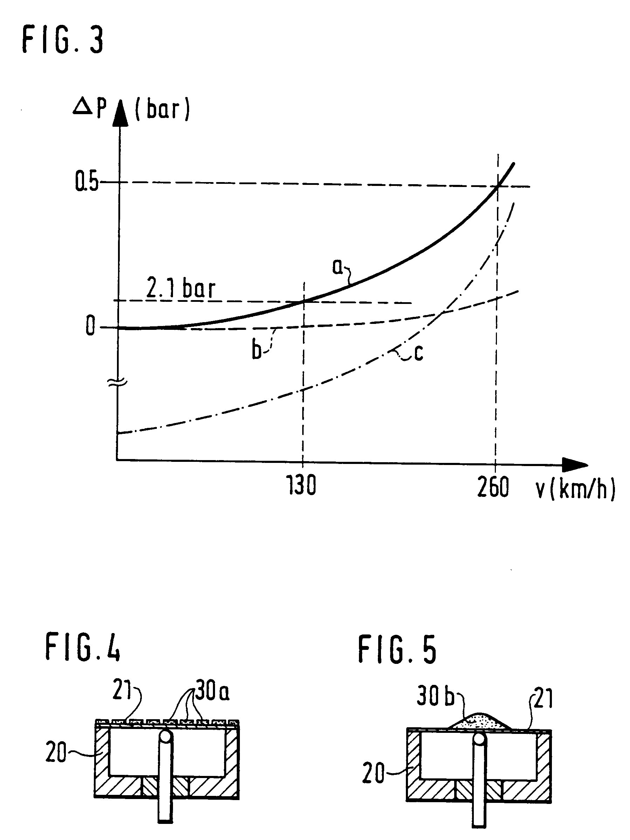

In Figur 1 ist der Ausschnitt eines Kraftfahrzeugrades in verkleinertem Maßstab im Querschnitt dargestellt und mit 10 bezeichnet. Er zeigt einen Reifen 11, der auf einer Radfelge 12 befestigt ist. An einem nach innen gerichteten Abschnitt der Radfelge 12 ist ein Reifendrucküberwacher 13 radial zur Radachse in einer Gewindebohrung 14 der Radfelge 12 befestigt. In geringem Abstand dazu ist im Bereich des Reifendrucküberwachers 13 an der nicht dargestellten Radaufhängung des Fahrzeugs ein Signalaufnehmer 15 befestigt, dessen Stirnseite zum Reifendrucküberwacher 13 hin gerichtet ist und eine hochfrequente Schwingung in den Reifendrucküberwacher 13 eingekoppelt, sobald dieser bei jeder Umdrehung des Fahrzeugrades 10 an ihm vorbeiläuft. Der Aufnehmer 15 ist gemeinsam mit den Aufnehmern der übrigen Fahrzeugräder an einer Auswerteschaltung 16 mit einer daran angeschlossenen Warnanzeige 17 verbunden, die bei zu geringem Luftdruck in einem der Reifen ein Warnsignal abgibt.

Der Aufbau des Reifendrucküberwachers 13 ist in Figur 2 dargestellt. Er besteht aus einem Gehäuse 18 aus Isolierstoff, das mit einem Gewindeansatz 19 in die Gewindebohrung 14 der Radfelge 12 einzuschrauben ist. Das Gehäuse 18 ist nach vorn zum Reifen 11 hin offen. In dem Gehäuse 18 ist eine Referenzdruckkammer 20 aus Stahl formschlüssig eingesetzt, die zum Reifen hin durch eine elektrisch leitende Membran 21 aus Edelstahl abgeschlossen ist. In der Mitte der Referenzdruckkammer 20 ist ein Kontaktstift 22 mit einer Glasdurchführung 23 druckdicht und elektrisch isoliert im Boden der Referenzdruckkammer 20 befestigt. An seinem vorderen Ende trägt er eine aufgeschweißte Kontaktkugel 24, vorzugsweise aus Gold. Die Membran 21 ist in ihrem äußeren Bereich druckdicht und spannungsfrei an der Referenzdruckkammer 20 durch Laserstrahl festgeschweißt. In dem von der Referenzdruckkammer 20 und der Membran 21 gebildeten Druckraum 25 wird über einen Einfüllkanal 26 Luft oder Stickstoff mit dem erforderlichen Referenzdruck eingefüllt, so daß die Membran 21 erst dann die Kontaktkugel 24 berührt, wenn der von außen auf die Membran 21 wirkende Luftdruck den zu überwachenden Mindestdruck im Reifen 11 des Fahrzeugs, d. h. den sogenannten Schwellwert erreicht. Nach dem Befüllen der Referenzdruckkammer 20 wird der Einfüllkanal 26 durch eine darin eingepreßte oder verschweißte Kugel 27 druckdicht verschlossen. Unterhalb der Referenzdruckkammer 20 ist noch eine Ringspule 28 sowie ein Kondensator 29 im Gehäuse 18 angeordnet, die zueinander in Reihe geschaltet sind und einen Schwingkreis bilden, der über die Membran 21 und den Kontaktstift 22 geöffnet bzw. geschlossen wird. Zu diesem Zweck ist das freie Ende der Ringspule 28 über die Referenzdruckkammer 20 mit der Membran 21 verbunden und nicht erkennbar das freie Ende des Kondensators 29 mit dem unteren Ende des Kontaktstiftes 22 kontaktiert. Bei ausreichendem Luftdruck ist folglich der Schwingkreis geschlossen, wodurch die vom Signalaufnehmer 15 eingekoppelt Schwingung bedämpft wird. Mit der Auswerteschaltung 16 wird die Bedämpfung bei ausreichendem Luftdruck durch den geschlossenen Schwingkreis bzw. die fehlende Bedämpfung bei zu geringem Luftdruck durch den geöffneten Schwingkreis detektiert.

An der Außenseite der Membran 21, die im montierten Zustand des Reifendrucküberwachers 13 zur Lauffläche des schlauchlosen Reifens parallel liegt, ist eine elastische Zusatzmasse 30 flächig aufgebracht, deren Material einen Elastizitätsmodul hat, welcher erheblich kleiner als 1/10 des Elastizitätsmoduls der Membran 21 ist. Im Beispielsfall nach Figur 2 ist die Zusatzmasse 30 auf der zum Reifen hin gerichteten Seite der Membran 21 gleichmäßig dick und ganzflächig aufgetragen. Ihr Material besteht aus einem Silikonkleber, der mit einem Metallpulver gefüllt ist. Zur Erhöhung der Fliehkraftwirkung durch die Zusatzmasse 30 ist vorgesehen, diese aus einem Material mit einem gegenüber der Membran 21 höheren spezifischen Gewicht herzustellen. Im Beispielsfall besteht das Material der Zusatzmasse 30 aus einem Silikonkleber mit etwa 5 Volumenprozenten Wolframpulver.

In Figur 3 zeigt die Kennlinie a den Verlauf der Schaltschwelle bei einem Reifendrucküberwacher 13 mit der Zusatzmasse 30 in Abhängigkeit von der Fahrgeschwindigkeit. Gegenüber dem Stillstandswert wird hier bei einer Fahrgeschwindigkeit von 260 km/h der Schwellwert des Reifendrucküberwachers 13 um $\Delta p \alpha$ 0,5 bar angehoben. Ohne Zusatzmasse 30 würde der Schwellwert nach der Kennlinie b durch die Masse der Membran 21 nur unerheblich um etwa 0,1 bar ansteigen. Die Kennlinie c zeigt den Mindestreifendruck, bis zu dem der Reifen unter Vollast zerstört würde. Diese Kennlinie steigt ebenfalls mit der Drehzahl progressiv an und schneidet die Kennlinie b bereits vor dem Erreichen der Höchstgeschwindigkeit. Ohne Zusatzmasse würde folglich der Reifen bei hohen Geschwindigkeiten und bei nicht erhöhtem Luftdruck ohne Warnung durch die Reifendrucküberwachungseinrichtung geschädigt werden. Durch die Zusatzmasse 30 wird nun der Schwellwert von der Kennlinie b auf die Kennlinie a angehoben, so daß die Kennlinie c nicht mehr geschnitten wird. Das hat zur Folge, daß nunmehr ein im unteren Drehzahlbereich ausreichender Reifendruck von beispielsweise 2,1 bar nur bis zu einer Geschwindigkeit von 130 km/h ausreichend ist. Bei höheren Geschwindigkeiten wird der Schwellwert des Reifendrucküberwachers 13 gemäß der Kennlinie a durch die Zusatzmasse 30 über den vorhandenen Reifendruck angehoben. Die Membran 21 hebt folglich vom Kontakt 24 ab und es wird ein Warnsignal an der Warnanzeige 17 abgegeben, das dem Fahrer signalisiert, die Fahrzeuggeschwindigkeit zu verringern oder den Reifendruck zu erhöhen.

Bei der Berechnung einer gleichmäßig auf die Membranoberseite aufgetragenen mit Wolframpulver gefüllten Silikonschicht als Zusatzmasse 30 wird zunächst der Versteifungsfaktor K der Membran 21 in bekannter Weise berechnet. Er ist abhängig vom Elastizitätsmodul $E = 200\ 000\ N/mm^2$ für Stahl, der Membrandicke und der Querdehnung $\gamma = 0,3$ für Stahl. Mit diesem Versteifungsfaktor K läßt sich nun die Auslenkung der Membranmitte bei einer bestimmten Anhebung des Reifendrucks $\Delta p$ bei einem bekannten Membranradius berechnen. Diese Auslenkung muß nun durch die an der Zusatzmasse 30 und der Membran 21 wirksamen Fliehkräfte kompensiert werden, um dadurch gemäß der Kennlinie a in Figur 3 den Schwellwert geschwindigkeitsabhängig um $\Delta p$ anzuheben. Die gesamte den Fliehkräften ausgesetzte Masse läßt sich in bekannter Weise mit dem Umlaufradius der Membran 21, der Fahrgeschwindigkeit des Fahrzeugs, dem Membrandurchmesser und dem Versteifungsfaktor K bestimmen. Von der so ermittelten gesamten Masse wird die von den Abmessungen und der Dichte $\rho = 7,9\ g/cm^3$ für Stahl der Membran subtrahiert und man erhält so den benötigten Wert für die Menge der Zusatzmasse 30. Bei einer Dichte von $\rho \approx 3\ g/cm^3$ für das Material der gleichmäßig verteilt aufgetragenen Zusatzmasse 30 ergibt sich im Beispielsfall eine Dicke von 1,0 mm.

Anstelle der auf der ganzen Membranfläche gleichmäßig aufgetragenen Zusatzmasse 30 kann diese auch in einem Raster gemäß Figur 4 gleichmäßig verteilt auf der Membranoberfläche aufgebracht werden. Auch hier läßt sich die Zusatzmasse 30a in der vorgenannten Weise ermitteln. Zweckmäßigerweise wird dabei die Menge der Zusatzmasse pro Flächeneinheit der Membran 21 ermittelt und in einem rasterförmigen Flächenmuster vor dem Ausstanzen der Membran 21 auf die Oberseite von Membranblechen aufgedruckt, aufgeklebt oder dergleichen.

Gemäß Figur 5 kann die Zusatzmasse 30b aber auch auf den der Kontaktfläche der Membran 21 abgewandten mittleren Bereich gehäuft aufgeklebt sein. Bei gleicher geschwindigkeitsabhängiger Anhebung nach der Kennlinie a aus Figur 3 wird hierbei jedoch eine geringere Menge vom mit Metallpulver gefüllten Silikonkleber als Zusatzmasse 30b benötigt, da diese nur im mittleren Bereich der Membran 21 angreift und dadurch eine größere Auslenkung der Membran 21 bewirken würde. Bei dieser Anordnung der Zusatzmasse 30b ist zur Ermittlung der fliehkraftabhängigen Auslenkung der Membran 21 noch ein empirisch oder rechnerisch zu ermittelnder Korrekturwert durch die nichtpunktförmige Befestigung der Zusatzmasse 30b in der Membranmitte zu berücksichten. Bei einem mit Metallpulver gefüllten Silikonkleber mit einem Elastizitätsmodul $E = 10$ $N/mm^2$ ist jedoch auch hier durch die Elastizität der Zusatzmasse 30b keine Versteifung der Membran 21 festzustellen.

Im Rahmen der Erfindung ist es auch möglich, die Zusatzmasse 30 auf der zur Referenzdruckkammer 20 hin gerichteten Seite der Membran 21, insbesondere ringförmig um den Kontaktstift 22 herum anzubringen, wo sie gegen mechanische Beschädigung, beispielsweise bei der Montage des Reifendrucküberwachers 13 besser geschützt ist. Ebenso kann die Zusatzmasse 30 auf beide Membranseiten verteilt angebracht werden. So kann z.B. für verschiedene Kennlinien eine stets gleiche Zusatzmassenmenge auf der Innenseite und eine Abgleichmenge auf der Außenseite der Membran 21 angebracht werden. Erfindungswesentlich ist bei all diesen gleichwirkenden Lösungen, daß die gesamte Masse der Membran 21 zur geschwindigkeitsabhängigen Anhebung des Schaltschwellwertes erhöht wird, ohne Einfluß auf die Steifigkeit und Form der Membran 21 zu nehmen. Besonders geeignet sind hierfür Materialien mit sehr geringem Elastizitätsmodul und hoher Dichte. Durch eine solche Zusatzmasse 30 läßt sich der Fliehkrafteinfluß bei der Schwellwertanhebung kostengünstig in einfacher Weise definiert einstellen. Das Massematerial ist so zu wählen, daß ihr Elastizitätsmodul erheblich kleiner als 1/10, vorzugsweise mindestens 1/100 des Elastizitätsmodules der Membran 21 ist.

**Patentansprüche**

1. Reifendrucküberwacher (13) für Fahrzeuge mit einem am Umfang der Radflege (12) von Fahrzeugrädern radial zur Radachse zu befestigenden, vom Reifendruck zu betätigenden Druckschalter, der eine Referenzdruckkammer (20) aufweist, welche zum Reifen (11) hin von einer elektrisch leitenden, zur Lauffläche des Reifens parallel angeordnete Membran (21) abgeschlossen ist, die die zum Reifen (11) hin frei ist, eine zur geschwindigkeitsabhängigen Anhebung der Schaltschwelle vorgesehene Zusatzmasse (30,30a,30b) trägt und mit einem in die Referenzdruckkammer (20) elektrisch isoliert eingesetzten Kontakt (22), an dem bei ausreichendem Luftdruck im Reifen (11) eine Kontaktfläche am mittleren Bereich der Membran (21) zur Schließung eines Stromkreises anliegt, wobei der Zustand des Stromkreises von einem am Fahrzeug befestigten Aufnehmer (15) mit einer Auswerteschaltung (16) drahtlos zu überwachen ist, dadurch gekennzeichnet, daß die Zusatzmasse (30, 30a, 30b) auf mindestens einer Membranseite flächig aufgebracht ist sowie aus einem Material besteht, dessen Elastizitätsmodul kleiner als 1/10 des Elastizitätsmodules der Membran (21) ist.

2. Reifendrucküberwacher (13) nach Anspruch 1, dadurch gekennzeichnet, daß die Zusatzmasse (30, 30a, 30b) ein mit Metallpulver, vorzugsweise aus Wolfram, gefüllter Silikonkleber ist.

3. Reifendrucküberwacher (13) nach einem der Ansprüche 1 oder 2, dadurch gekennzeichnet, daß die Zusatzmasse (30) auf der zum Reifen hin gerichteten Seite der Membran (21) gleichmäßig dick und ganzflächig aufgebracht ist.

4. Reifendrucküberwacher (13) nach einem der Ansprüche 1 oder 2, dadurch gekennzeichnet, daß die Zusatzmasse (30a) auf der zum Reifen (11) hin gerichteten Oberfläche der Membran (21) gleichmäßig rasterförmig verteilt aufgebracht ist.

5. Reifendrucküberwacher (13) nach einem der Ansprüche 1 oder 2, dadurch gekennzeichnet, daß die Zusatzmasse (30b) auf den mittleren Bereich der Membran (21) auf der der Kontaktfläche (24) abgewandten Seite gehäuft aufgeklebt ist.

## Claims

1. Tyre-pressure monitor (13) for vehicles, comprising a pressure switch which is to be fixed to the periphery of the wheel rim (12) of vehicle wheels radially to the wheel axis, is to be actuated by the tyre pressure and has a reference-pressure chamber (20) which is closed off towards the tyre (11) by an electrically conductive diaphragm (21) which is arranged parallel to the tread of the tyre, is free towards the tyre (11), [lacuna] carries an additional mass (30, 30a, 30b) provided for increasing the switching threshold as a function of speed, and a contact (22) which is inserted in an electrically insulated manner into the reference-pressure chamber (20) and against which, when air pressure in the tyre (11) is sufficient, a contact area at the centre region of the diaphragm (21) bears for closing an electric circuit, in which arrangement the state of the electric circuit is to be monitored in a cordless manner by a receiver (15) fixed to the vehicle and having an analysing circuit (16), characterized in that the additional mass (30, 30a, 30b) is applied over the surface to at least one diaphragm side and is also made of a material whose modulus of elasticity is less than 1/10th of the modulus of elasticity of the diaphragm (21).

2. Tyre-pressure monitor (13) according to Claim 1, characterized in that the additional mass (30, 30a, 30b) is a silicone adhesive filled with a metal powder, preferably of tungsten.

3. Tyre-pressure monitor (13) according to either of Claims 1 or 2, characterized in that the additional mass (30) is applied with uniform thickness and over the full surface to the side of the diaphragm (21) directed towards the tyre.

4. Tyre-pressure monitor (13) according to either of Claims 1 or 2, characterized in that the additional mass (30a) is applied in a uniformly distributed grid shape to the surface of the diaphragm (21) directed towards the tyre (11).

5. Tyre-pressure monitor (13) according to either of Claims 1 or 2, characterized in that the additional mass (30b), on the centre region of the diaphragm (21), is adhesively bonded in a heaped manner to the side remote from the contact area (24).

## Revendications

1. Contrôleur de pression de pneus 13 pour véhicules, comportant un commutateur de pression fixé à la périphérie de la jante (12) de la roue, radialement par rapport à l'axe de la roue, et qui est actionné par la pression du pneumatique, ce commutateur de pression comportant une chambre de pression de référence (20) fermée par rapport au pneumatique (11) par une membrane (21) conductrice d'électricité, parallèle à la surface de roulement du pneumatique, membrane qui est libre du côté du pneumatique (11), et porte une masse complémentaire (30, 30 a, 30 b) prévue pour relever le seuil de commutation en fonction de la vitesse et comporte un contact (22) monté de manière isolée électriquement dans la chambre de pression de référence (20), contact contre lequel s'applique une surface de contact de la zone médiane de la membrane (21) lorsque la pression de gonflement du pneumatique (11) est suffisante, pour fermer un circuit électrique, l'état du circuit électrique étant surveillé suivant une liaison sans fil par un capteur (15) fixé au véhicule et relié à un circuit d'exploitation (16), contrôleur, caractérisé en ce que la masse complémentaire (30, 30a, 30b) est appliquée en surface sur au moins une face de la membrane et cette masse est en un matériau dont le module d'élasticité est inférieur à 1/10 du module d'élasticité de la membrane (21).

2. Contrôleur de pression de pneumatiques (13) selon la revendication, caractérisé en ce que la masse complémentaire (30, 30a, 30b) est une colle de silicone chargée d'une poudre métallique de préférence une poudre de tungstène.

3. Contrôleur de pression de pneumatiques (13) selon l'une des revendications 1 ou 2, caractérisé en ce que la masse complémentaire (30) est appliquée avec une épaisseur régulière et sur toute la surface de la face de la membrane (21) tournée vers le pneumatique.

4. Contrôleur de pression de pneumatiques (13) selon l'une des revendications 1 ou 2, caractérisé en ce que la masse complémentaire (30a) est appliquée de manière répartie régulièrement suivant une forme de trame, sur la face de la membrane (21) tournée vers le pneumatique (11).

5. Contrôleur de pression de pneumatiques (13) selon l'une des revendications 1 ou 2, caractérisé en ce que la masse complémentaire (30b) est collée de manière accumulée sur la zone centrale de la membrane (21) sur la face opposée à la surface de contact (24).

# FIG.1

# FIG.2

# FIG. 3

# FIG.4

# FIG.5